# FASCICULE DE BREVET EUROPEEN

(11) **EP 3 887 180 B1**
(45) Date de publication et mention de la délivrance du brevet: **14.02.2024**
(21) Numéro de dépôt: 19813464.5
(22) Date de dépôt: 28.11.2019
(51) Int. Cl.: B60H 1/00

(54) **VÉHICULE AUTOMOBILE COMPRENANT UNE INSTALLATION DE CHAUFFAGE,VENTILATION ET CLIMATISATION D'AIR FIXÉE DANS LE COMPARTIMENT MOTEUR**
KRAFTFAHRZEUG MIT EINER IM MOTORRAUM MONTIERTEN HEIZUNGS-, LÜFTUNGS- UND KLIMAANLAGE
MOTOR VEHICLE COMPRISING AN INSTALLATION FOR HEATING, VENTILATION AND AIR-CONDITIONING, MOUNTED IN THE ENGINE COMPARTMENT

(30) Priorité: 30.11.2018 FR 1872112
(43) Date de publication de la demande: 06.10.2021
(73) Titulaire: Renault s.a.s, 92100 Boulogne Billancourt (FR)
(72) Inventeur: LAMARE, Max, 91410 DOURDAN (FR); LURON, Stevens, 78280 guyancourt (FR)
(74) Mandataire: Renault Group
(86) Numéro de dépôt international: PCT/EP2019/082931
(87) Numéro de publication internationale: WO 2020/109478

(56) Documents cités:
- EP-A1- 0 594 510
- CN-U- 203 418 999
- FR-A1- 2 845 657
- FR-A3- 2 965 219
- JP-A- S6 291 308
- JP-A- 2004 358 995
- US-A1- 2017 072 765

## Description

La présente invention concerne le domaine de la fixation des installations de chauffage, ventilation et climatisation d'air, dites « HVAC, Heating, Ventilation, Air-conditionning » en termes anglo-saxons dans les véhicules automobiles.

Plus particulièrement, l'invention concerne la fixation des installations HVAC dans les véhicules automobiles à propulsion électrique et autonomes.

De manière générale, il est connu d'implanter les installations HVAC à l'intérieur de l'habitacle des véhicules automobiles à propulsion électrique et autonomes, ce qui génère un fort encombrement dans l'habitacle du véhicule.

On pourra à cet égard se référer au document CN 203418999 qui décrit un système de fixation d'une installation HVAC, toutefois, une telle fixation ne garantit pas la tenue vibratoire et mécanique du HVAC dans le véhicule automobile.

Il existe un besoin pour optimiser l'encombrement des systèmes de fixation des installations de chauffage, ventilation et climatisation d'air, dites « HVAC » dans les véhicules automobiles, tout en assurant un maintien fiable de l'installation HVAC et une facilité de montage.

On connaît le document FR2965219 qui décrit un véhicule selon le préambule de la revendication 1.

La présente invention a pour objet un véhicule automobile comprenant un habitacle, un compartiment moteur et un tablier délimitant l'habitacle dudit compartiment moteur.

Le véhicule automobile comprend une installation de chauffage, ventilation et climatisation d'air montée dans le compartiment moteur et fixée sur deux renforts de fixation solidaires du tablier.

Selon l'invention, le véhicule comprend aussi au moins une patte de guidage solidaire d'au moins un des renforts de fixation et configurée pour guider l'installation HVAC lors du montage dans le compartiment moteur.

Ainsi, grâce à l'implantation de l'installation HVAC dans le compartiment moteur du véhicule automobile, l'encombrement dans l'habitacle du véhicule est optimisé.

Les renforts de fixation sont des pièces distinctes du tablier et rendues solidaire dudit tablier par tout moyen de fixation de type visserie, collage, soudage etc...

Avantageusement, l'installation HVAC comprend un encadrement de fixation comportant au moins quatre pattes de fixation disposées deux à deux de chaque côté de l'installation HVAC. Chaque paire de pattes de fixation est fixées sur le renfort de fixation correspondant.

Par exemple, les pattes de fixation sont fixées sur le renfort de fixation correspondant à l'aide de goujons et d'écrous.

Grâce à la fixation de l'installation HVAC par quatre points de fixation sur deux renforts solidaires du tablier, la tenue vibratoire et mécanique de ladite installation sur ledit tablier est respectée.

Chacun des renforts de fixation peut, par exemple, s'étendre selon une direction sensiblement verticale, de manière parallèle au tablier.

Avantageusement, les deux renforts de fixation sont disposés symétriquement par rapport à l'installation HVAC.

Avantageusement, la patte de guidage comprend une portion de fixation solidaire d'au moins un des renforts de fixation et une portion de guidage s'étendant à partir de la portion de fixation vers l'avant du véhicule.

La portion de guidage peut, par exemple, s'étendre de manière sensiblement perpendiculaire par rapport à la portion de fixation.

Par exemple, la portion de guidage comprend une extrémité libre inclinée vers l'installation HVAC.

D'autres buts, caractéristiques et avantages de l'invention apparaîtront à la lecture de la description suivante, donnée uniquement à titre d'exemple non limitatif, et faite en référence aux dessins annexés sur lesquels :
[Fig.1] représente schématiquement, en perspective, une partie d'un véhicule automobile selon l'invention ; et

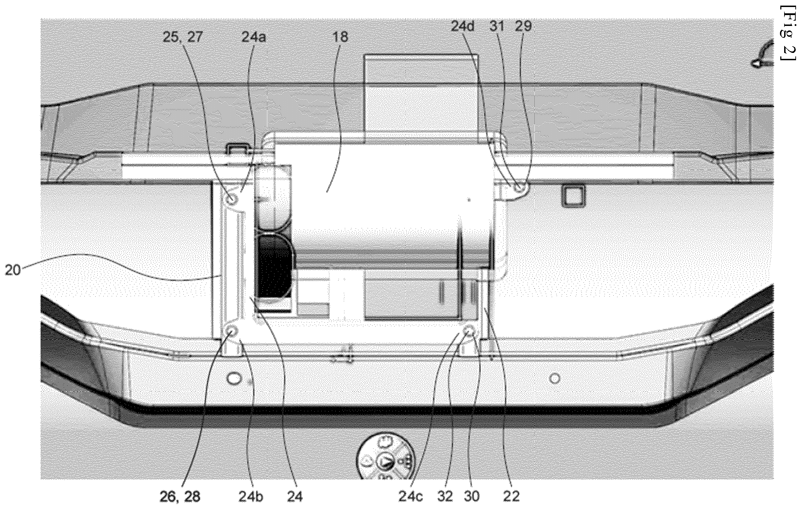

[Fig.2] est une vue de face de la figure 1.

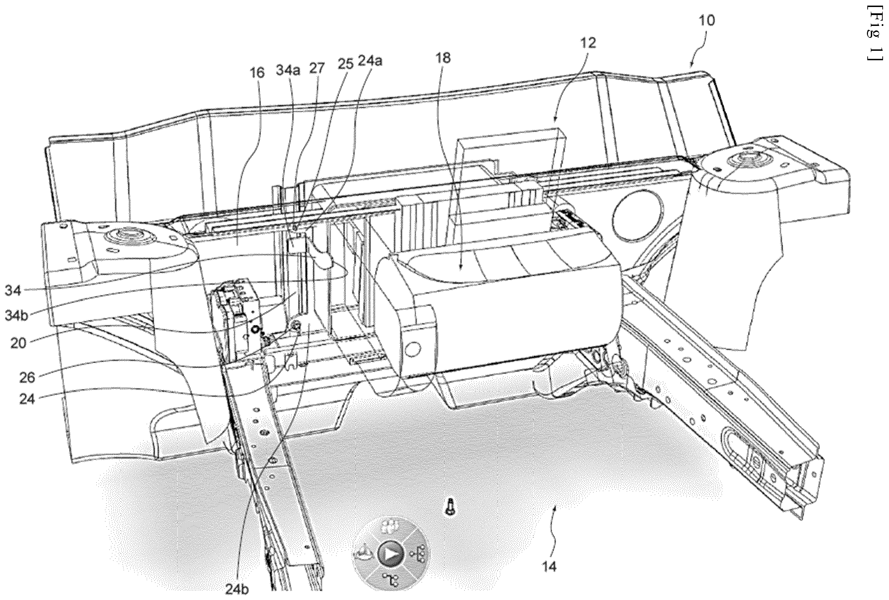

Tel qu'illustré sur la figure 1, un véhicule automobile, référencé 10 dans son ensemble, comprend un habitacle 12, un compartiment moteur 14 et un tablier 16 séparant l'habitacle 12 du compartiment moteur 14.

Le véhicule automobile 10 comprend en outre une installation 18 de chauffage, ventilation et climatisation d'air, dites « HVAC, Heating, Ventilation, Air-conditionning » en termes anglo-saxons dans les véhicules automobiles. Une telle installation 18 de chauffage, ventilation et climatisation d'air, dite « HVAC » est connue et ne sera pas davantage décrite.

Tel qu'illustré, le véhicule automobile 10 comprend deux renforts de fixation 20, 22 disposés symétriquement par rapport à l'installation HVAC 18.

Les renforts de fixation 20, 22 sont montés sur le tablier 16. Chacun des renforts de fixation 20, 22 s'étend selon une direction sensiblement verticale, de manière parallèle au tablier 16.

L'installation HVAC 18 comprend un encadrement de fixation 24 comportant quatre pattes de fixation 24a, 24b, 24c, 24d, disposées deux à deux de chaque côté de l'installation HVAC 18 et pourvues chacune d'un perçage (non référencé sur les figures).

Les deux pattes de fixation 24a, 24b disposées d'un premier côté de l'installation HVAC 18 sont fixées sur le premier renfort de fixation 20 à l'aide de goujons 25, 26 insérés dans le perçage de la patte de fixation correspondante et coopérant avec un écrou 27, 28.

De manière similaire, les deux pattes de fixation 24c, 24d disposées du deuxième premier côté de l'installation HVAC 18 sont fixées sur le deuxième renfort de fixation 22 à l'aide de goujons 29, 30 inséré dans le perçage de la patte de fixation correspondante et coopérant avec un écrou 31, 32.

La patte de fixation 24c est montée sur le renfort de fixation 22 sur le tablier 16.

Tel qu'illustré sur la figure 1, le véhicule automobile 10 comprend une patte de guidage 34 comprenant une portion de fixation 34a solidaire du premier renfort de fixation 20 et une portion de guidage 34b s'étendant à partir de la portion de fixation 34a vers l'avant du véhicule 10. La portion de guidage 34b s'étendant de manière sensiblement perpendiculaire par rapport à la portion de fixation 34a. tel qu'illustré, l'extrémité libre de la portion de guidage 34b est légèrement inclinée vers l'installation HVAC 18 afin de guider l'encadrement de fixation 24 lors du montage de l'installation HVAC 18 dans le compartiment moteur 14.

Ainsi, grâce à l'implantation de l'installation HVAC dans le compartiment moteur du véhicule automobile, l'encombrement dans l'habitacle du véhicule est optimisé.

De plus, l'installation HVAC est fixée par quatre points de fixation sur un renfort solidaire du tablier, ce qui permet de garantir une fixation fiable garantissant une tenue vibratoire et mécanique de ladite installation sur ledit tablier.

## Revendications

1. Véhicule automobile (10) comprenant un habitacle (12), un compartiment moteur (14) et un tablier (16) délimitant l'habitacle (12) dudit compartiment moteur (14), comprenant une installation (18) de chauffage, ventilation et climatisation d'air montée dans le compartiment moteur (14), **caractérisé en ce que** l'installation de chauffage (18) est fixée sur deux renforts de fixation (20, 22) solidaires du tablier (16) , et **en ce que** le véhicule comprend au moins une patte de guidage (34) solidaire d'au moins un des renforts de fixation (20) et configurée pour guider l'installation HVAC (18) lors du montage dans le compartiment moteur (14).

2. Véhicule automobile (10) selon la revendication 1, dans lequel l'installation HVAC (18) comprend un encadrement de fixation (24) comportant au moins quatre pattes de fixation (24a, 24b, 24c, 24d) disposées deux à deux de chaque côté de l'installation HVAC (18), chaque paire de pattes de fixation (24a, 24b ; 24c, 24d) étant fixées sur le renfort de fixation correspondant (20, 22).

3. Véhicule automobile (10) selon la revendication 2, dans lequel les pattes de fixation (24a, 24b ; 24c, 24d) sont fixées sur le renfort de fixation correspondant (20, 22) à l'aide de goujons (25, 26 ; 29, 30) et d'écrous (27, 28 ; 31, 32).

4. Véhicule automobile (10) selon l'une quelconque des revendications précédentes, dans lequel chacun des renforts de fixation (20, 22) s'étend selon une direction sensiblement verticale, de manière parallèle au tablier (16).

5. Véhicule automobile (10) selon l'une quelconque des revendications précédentes, dans lequel les deux renforts de fixation (20, 22) sont disposés symétriquement par rapport à l'installation HVAC (18).

6. Véhicule automobile (10) selon l'une des revendications précédentes, dans lequel la patte de guidage (34) comprend une portion de fixation (34a) solidaire d'au moins un des renforts de fixation (20) et une portion de guidage (34b) s'étendant à partir de la portion de fixation (34a) vers l'avant du véhicule (10).

7. Véhicule automobile (10) selon la revendication 6, dans lequel la portion de guidage (34b) s'étend de manière sensiblement perpendiculaire par rapport à la portion de fixation (34a).

8. Véhicule automobile (10) selon la revendication 6 ou 7, dans lequel la portion de guidage (34b) comprend une extrémité libre inclinée vers l'installation HVAC (18).

## Patentansprüche

1. Kraftfahrzeug (10), das eine Fahrgastzelle (12), einen Motorraum (14) und eine Platte (16), die die Fahrgastzelle (12) von dem Motorraum (14) abgrenzt, beinhaltet, beinhaltend eine Heizungs-, Lüftungs- und Klimaanlage (18), die in dem Motorraum (14) montiert ist, **dadurch gekennzeichnet, dass** die Heizungsanlage (18) an zwei Befestigungsrippen (20, 22) befestigt ist, die mit der Platte (16) fest verbunden sind, und dass das Fahrzeug mindestens eine Führungslasche (34) beinhaltet, die mit mindestens einer der Befestigungsrippen (20) fest verbunden ist und dazu konfiguriert ist, die HVAC-Anlage (18) während des Einbaus in den Motorraum (14) zu führen.

2. Kraftfahrzeug (10) nach Anspruch 1, wobei die HVAC-Anlage (18) einen Befestigungsrahmen (24) beinhaltet, der mindestens vier Befestigungslaschen (24a, 24b, 24c, 24d) umfasst, die paarweise auf jeder Seite der HVAC-Anlage (18) angeordnet sind, wobei jedes Paar Befestigungslaschen (24a, 24b; 24c, 24d) an der entsprechenden Befestigungsrippe (20, 22) befestigt ist.

3. Kraftfahrzeug (10) nach Anspruch 2, wobei die Befestigungslaschen (24a, 24b; 24c, 24d) mit Hilfe von Stiftschrauben (25, 26; 29, 30) und Muttern (27, 28; 31, 32) an der entsprechenden Befestigungsrippe (20, 22) befestigt sind.

4. Kraftfahrzeug (10) nach einem beliebigen der vorhergehenden Ansprüche, wobei sich jede der Befestigungsrippen (20, 22) gemäß einer im Wesentlichen vertikalen Richtung parallel zu der Platte (16) erstreckt.

5. Kraftfahrzeug (10) nach einem beliebigen der vorhergehenden Ansprüche, wobei die zwei Befestigungsrippen (20, 22) in Bezug auf die HVAC-Anlage (18) symmetrisch angeordnet sind.

6. Kraftfahrzeug (10) nach einem der vorhergehenden Ansprüche, wobei die Führungslasche (34) einen Befestigungsabschnitt (34a), der mit mindestens einer der Befestigungsrippen (20) fest verbunden ist, und einen Führungsabschnitt (34b), der sich von dem Befestigungsabschnitt (34a) zur Vorderseite des Fahrzeugs (10) erstreckt, beinhaltet.

7. Kraftfahrzeug (10) nach Anspruch 6, wobei sich der Führungsabschnitt (34b) im Wesentlichen senkrecht zu dem Befestigungsabschnitt (34a) erstreckt.

8. Kraftfahrzeug (10) nach Anspruch 6 oder 7, wobei der Führungsabschnitt (34b) ein freies Ende beinhaltet, das zu der HVAC-Anlage (18) hin geneigt ist.

## Claims

1. Motor vehicle (10) comprising a passenger compartment (12), an engine compartment (14) and a bulkhead (16) that delimits the passenger compartment (12) from said engine compartment (14), comprising a heating, ventilation and air-conditioning installation (18) that is mounted in the engine compartment (14) and fastened to two fastening reinforcements (20, 22) that are secured to the bulkhead (16), and in that the vehicle comprises at least one guiding tab (34) that is secured to at least one of the fastening reinforcements (20) and is configured to guide the HVAC installation (18) during mounting in the engine compartment (14).

2. Motor vehicle (10) according to Claim 1, wherein the HVAC installation (18) comprises a fastening frame (24) that has at least four fastening tabs (24a, 24b, 24c, 24d) disposed in pairs on each side of the HVAC installation (18), each pair of fastening tabs (24a, 24b; 24c, 24d) being fastened to the corresponding fastening reinforcement (20, 22).

3. Motor vehicle (10) according to Claim 2, wherein the fastening tabs (24a, 24b; 24c, 24d) are fastened to the corresponding fastening reinforcement (20, 22) with the aid of studs (25, 26; 29, 30) and nuts (27, 28; 31, 32).

4. Motor vehicle (10) according to any one of the preceding claims, wherein each of the fastening reinforcements (20, 22) extends in a substantially vertical direction, parallel to the bulkhead (16).

5. Motor vehicle (10) according to any one of the preceding claims, wherein the two fastening reinforcements (20, 22) are disposed symmetrically relative to the HVAC installation (18).

6. Motor vehicle (10) according to one of the preceding claims, wherein the guiding tab (34) comprises a fastening portion (34a) that is secured to at least one of the fastening reinforcements (20) and a guiding portion (34b) that extends from the fastening portion (34a) towards the front of the vehicle (10).

7. Motor vehicle (10) according to Claim 6, wherein the guiding portion (34b) extends substantially perpendicular to the fastening portion (34a).

8. Motor vehicle (10) according to Claim 6 or 7, wherein the guiding portion (34b) comprises a free end that is inclined towards the HVAC installation (18).
